# FASCICULE DE BREVET EUROPEEN

(11) **EP 2 939 450 B1**
(45) Date de publication et mention de la délivrance du brevet: **19.10.2016**
(21) Numéro de dépôt: 14705844.0
(22) Date de dépôt: 23.01.2014
(51) Int. Cl.: H04W 4/12, H04W 4/14

(54) **TRANSMISSION D'UN MESSAGE MULTIMÉDIA DOUBLÉE PAR ÉMISSION D'UN MESSAGE TEXTUEL**
ÜBERTRAGUNG EINER MULTIMEDIA-NACHRICHT IN KOMBINATION MIT DER ÜBERTRAGUNG EINER TEXTNACHRICHT
TRANSMISSION OF A MULTIMEDIA MESSAGE DOUBLED WITH THE TRANSMISSION OF A TEXT MESSAGE

(30) Priorité: 12.02.2013 FR 1351195
(43) Date de publication de la demande: 04.11.2015
(73) Titulaire: Streamwide, 75010 Paris (FR)
(72) Inventeur: FERRAZ, Antoni, F-94350 Villiers S/Marne (FR)
(74) Mandataire: Cabinet Plasseraud
(86) Numéro de dépôt international: PCT/FR2014/050132
(87) Numéro de publication internationale: WO 2014/125183

(56) Documents cités:
- US-A1- 2004 157 590
- US-A1- 2008 172 561
- ALFREDO DE SANTIS ET AL: "An Extensible Framework for Efficient Secure SMS", COMPLEX, INTELLIGENT AND SOFTWARE INTENSIVE SYSTEMS (CISIS), 2010 INTERNATIONAL CONFERENCE ON, IEEE, PISCATAWAY, NJ, USA, 15 février 2010 (2010-02-15), pages 843-850, XP031657747, ISBN: 978-1-4244-5917-9
- "3rd Generation Partnership Project; Technical Specification Group Terminals; Multimedia Messaging Service (MMS); Functional description; Stage 2 (Release 5)", 3GPP STANDARD; 3GPP TS 23.140, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.3.0, 1 juin 2002 (2002-06-01), pages 1-155, XP050362814,

## Description

La présente invention concerne une transmission de message multimédia entre deux terminaux, notamment des terminaux mobiles.

Elle concerne plus particulièrement la gestion d'attente d'une notification d'accusé de réception, que met en oeuvre le terminal ayant envoyé le message multimédia.

On entend par « message multimédia » un message, notamment mais non limitativement de type message instantané dans le cadre d'un service de messagerie instantanée, et comportant un ou plusieurs contenus multimédias tels qu'une image, une vidéo, un contenu audio, ou autres.

Des terminaux de télécommunication actuels peuvent transmettre des messages ou fichiers multimédia via des réseaux de données multimédia prévus à cet effet tels que GPRS, EDGE, H, H+, 3G, 4G, WIFI, internet. Les messages multimédia peuvent être expédiés sous la forme d'un message de courrier électronique (e-mail) ou par une application de services de messagerie multimédia MMS (Multimedia Messaging Service) ou de services de messagerie instantanée IM, ou par une application de type client-serveur sur un réseau de type internet.

Les applications de services de messagerie multimédia MMS prévoient qu'un message textuel de notification contenant un lien du type adresse URL pour accéder à un message ou un fichier multimédia stocké sur un serveur via le réseau internet, soit envoyé au terminal destinataire si par exemple son terminal n'est pas compatible avec ces applications ou s'il n'est pas en mesure de recevoir un MMS.

On connaît aussi des applications de services de messagerie instantanée sur plateforme de téléphonie mobile utilisant les SMS pour envoyer des messages textuels à la place des messages multimédia lorsque le service de messagerie n'est pas accessible via le réseau de données multimédia. Par exemple, si un premier terminal, émetteur, est situé dans une zone qui ne permet pas la transmission de données multimédia ou l'accès à l'un des réseaux de données multimédia, il envoie un message textuel par SMS au travers du réseau classique GSM/CDMA au deuxième terminal, destinataire. Un message textuel de type SMS peut également être envoyé par le premier terminal s'il ne parvient pas à accéder au service de messagerie instantanée.

Certaines applications de services de messagerie instantanée implémentent des systèmes de présence qui indiquent à un premier terminal qu'un deuxième terminal destinataire est connecté au service. On pourrait prévoir de faire en sorte que, si le système de présence indique que le deuxième terminal n'est pas connecté au service, alors le premier terminal envoie un message textuel par SMS au deuxième terminal.

Toutefois, ce type de gestion d'envoi/réception des messages multimédia ou textuels présenterait au moins un inconvénient.

L'utilisateur du terminal qui reçoit des messages multimédias devrait se connecter à un réseau multimédia pour être notifié de nouveaux messages multimédia reçus. En effet, tant qu'il ne peut se connecter à ce type de réseau, il n'a pas connaissance des messages multimédias en attente de réception. On pourrait prévoir que le terminal qui reçoit un message multimédia, reçoive aussi un message textuel de notification de disponibilité du message multimédia. Toutefois, le système d'accusé de réception provoquerait des messages en doublons sur le deuxième terminal lorsque le message multimédia et le message textuel de notification de réception du message multimédia sont réceptionnés.

En outre, les systèmes de présence ne sont pas fiables. Ils peuvent indiquer par erreur au premier terminal que le deuxième terminal n'est pas connecté au service. En conséquence, le premier terminal enverrait un message SMS au deuxième terminal alors que l'envoi d'un message multimédia est possible. Inversement, ils peuvent indiquer par erreur à l'utilisateur du premier terminal que le deuxième terminal est connecté au service. En conséquence, le premier terminal enverrait un message multimédia au deuxième terminal qui n'est pas connecté au service de messagerie instantanée, l'utilisateur du deuxième terminal n'ayant pas connaissance de la réception du message multimédia.

On peut citer pour l'art antérieur connu des systèmes d'échange de messages textuels ou multimédia suivants :
- Le document US2004/157590 ;
- Le document US2008/172561 ;
- L'article "An Extensible Framework for Efficient Secure SMS », Alfredo DE SANTIS et Al,15 février 2010 et
- La norme de réseau de télécommunications mobiles de 3ème génération "3rd Génération Partnership Project ; Technical Spécification Group Terminals ; Multimedia Messaging Service (MMS) ; Functional description ; Stage 2 (Release5)", V5.3.0, 1 june 2002 (2002-06-01), page 1-155 (2002-06).

La présente invention vient améliorer la situation.

Elle propose à cet effet un procédé de transmission d'un message multimédia d'un premier terminal à un deuxième terminal, dans lequel on prévoit la notification, du deuxième terminal au premier terminal, d'un accusé de réception par le deuxième terminal dudit message multimédia. En particulier, ce procédé est conforme à la revendication 1 et :
- le premier terminal mesure un délai d'attente de la notification d'accusé de réception, et
- si ledit délai d'attente dépasse un seuil prédéterminé, le premier terminal génère un message textuel destiné au deuxième terminal.

Typiquement, le message textuel peut être véhiculé par un réseau ne nécessitant pas les moyens d'un réseau capable de transférer un contenu multimédia.

Ainsi, le message multimédia est transmis via un premier réseau de télécommunications, et ledit message textuel est émis par le premier terminal via un second réseau.

Ceci peut avantageusement apporter une meilleure fiabilité ainsi qu'un meilleur ressenti pour l'utilisateur d'un terminal grâce à l'utilisation optimisée des deux types de réseaux, par exemple respectivement de données multimédia (data par exemple) pour le premier réseau et classique (de type GSM/CDMA par exemple) pour le deuxième réseau. En effet, si un message multimédia est envoyé par un premier terminal vers un deuxième terminal qui n'a pas accès au premier type de réseau véhiculant les données multimédias, le deuxième terminal peut néanmoins recevoir un message textuel de notification de disponibilité de message multimédia via le deuxième type de réseau.

Dans une réalisation, le message textuel comporte une information de disponibilité du message multimédia pour le deuxième terminal. Ainsi par exemple, selon que le premier terminal a accès à un réseau de type classique ou à un réseau de type multimédia, le procédé selon ce mode de réalisation de l'invention prévoit d'envoyer un message textuel et/ou un message multimédia, sans tenir compte des indications des systèmes de présence peu fiables. Ainsi, si le premier terminal a accès au réseau multimédia il envoie toujours un message multimédia au deuxième terminal, le système de délai d'attente d'un accusé de réception implémenté sur le premier terminal peut, si le délai de réception de l'accusé de réception dépasse un seuil prédéterminé, envoyer automatiquement un message textuel (par exemple de type SMS), de notification de disponibilité d'un message multimédia, au deuxième terminal et via un second réseau, afin de garantir la livraison du message par ce deuxième canal. Une telle réalisation offre une plus grande fiabilité de livraison des messages de type texte car il offre une couverture de connectivité plus grande que si un seul réseau était utilisé.

Le statut de connexion peut être interprété par exemple par une application mise en oeuvre sur le premier terminal. Celle-ci bascule automatiquement sur le réseau disponible, par ordre de préférence réseau « data » vers réseau « GSM/CDMA » par exemple, pour envoyer un message texte uniquement.

Ainsi, l'utilisateur du premier terminal connait un retour efficace et fiable sur le statut d'acheminement des messages textuels ou multimédia qu'il a envoyés.

A titre d'exemple, l'invention trouve une application avantageuse mais non limitative à la gestion de messagerie instantanée (ou « tchat ») incluant du contenu multimédia et supportée par un serveur dédié.

Dans une telle forme de réalisation, le message multimédia est alors un message dans une application de messagerie instantanée, et il est destiné à transiter via un serveur dédié entre les premier et deuxième terminaux.

Le premier terminal affecte à chaque message multimédia un identifiant propre. Préférentiellement, le premier terminal, en l'absence d'accusé de réception d'un message multimédia après le délai d'attente, affecte à un message textuel généré une signature de l'identifiant dudit message multimédia. Ainsi, sur réception d'un message textuel, le deuxième terminal peut alors comparer la signature du message textuel à au moins un identifiant que comporte un message multimédia reçu par le deuxième terminal, et en cas de correspondance, le deuxième terminal supprime le message textuel reçu.

Ainsi, le deuxième terminal met en oeuvre une suppression des messages textuels de notification de disponibilité des messages multimédias dès lors que ces messages multimédias ont été effectivement réceptionnés par le deuxième terminal.

En filtrant l'affichage des messages SMS reçus en surplus des messages multimédias, le deuxième terminal effectue une suppression efficace des messages textuels de notification de disponibilité considérés comme des doublons des messages multimédia. La vérification de signature permet ainsi la suppression des doublons de façon efficace et garantit une ergonomie d'utilisation nettement améliorée.
- La présente invention vise aussi un système comportant au moins un premier terminal et un deuxième terminal, selon la revendication 6.
- La présente invention vise aussi un terminal de télécommunication selon la revendication 7.

La présente invention vise aussi un programme informatique comportant des instructions pour la mise en oeuvre du procédé général au sens de l'invention, lorsqu'il est mis en oeuvre par un processeur d'un terminal du type précité.

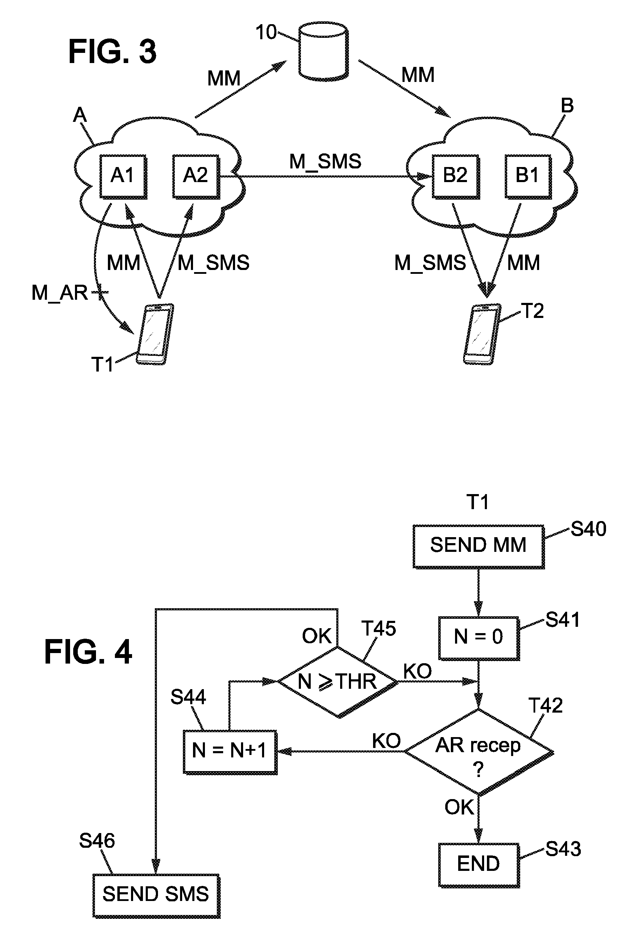

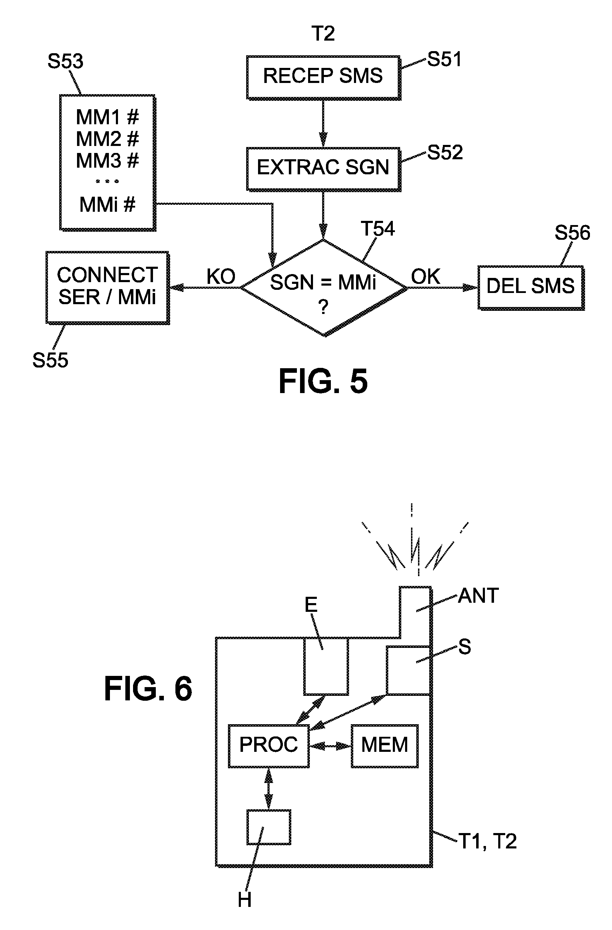

L'algorithme général d'un tel programme peut être représenté par un organigramme tel que celui de la figure 5 commentée plus loin. Ce programme informatique peut être une routine du programme informatique dont L'algorithme général est présenté sur la figure 4.

Le programme informatique pour la mise en oeuvre du procédé général au sens de l'invention peut se présenter par exemple sous la forme d'un plugin spécifique agrégé à une application logicielle générale telle que, par exemple, une application propre à un service de messagerie instantanée installée sur chaque terminal. Cette application, ainsi enrichie, permet la gestion automatique des deux types de réseau ainsi que la gestion des doublons (dans un mode de réalisation optionnel mais avantageux) et des accusés de réception des messages textuels (par exemple de type SMS) ou des messages multimédias transmis ou reçus.

En effet, en vue d'interagir avec les deux types de messages (multimédia et SMS), l'application intègre aussi bien le service de messagerie multimédia instantanée et un service généralement natif, de messagerie SMS, du premier ou du deuxième terminal, ce qui permet d'intercepter/accéder à des fonctionnalités d'émission/réception/ stockage de messages SMS. L'application intègre également la gestion du statut d'accès au réseau, ce qui lui permet d'utiliser le deuxième réseau précité (par exemple de type GSM/CDMA) pour les messages textuels lorsque le premier réseau précité (de type data) n'est pas disponible. Ces différents intégrations au sein du premier terminal et/ou du deuxième terminal permettent une interprétation efficace et en temps réel du statut de connexion et des canaux de messagerie disponibles.

D'autres avantages et caractéristiques de l'invention apparaîtront à la lecture de la description détaillée ci-après d'exemples de réalisation de l'invention et à l'examen des dessins sur lesquels :
- la figure 1 illustre un premier scénario de transmission de message multimédia nécessitant l'émission d'un message SMS après une temporisation, pour défaut d'accès à un réseau approprié par le deuxième terminal,
- la figure 2 illustre un second scénario de transmission de message multimédia nécessitant l'émission d'un message SMS après une temporisation, pour défaut de réception d'accusé de réception par le premier terminal due à défaut d'accès à un réseau approprié par le deuxième terminal,
- la figure 3 illustre un troisième scénario de transmission de message multimédia nécessitant l'émission d'un message SMS après une temporisation, pour défaut de réception d'accusé de réception par le premier terminal due à défaut d'accès à un réseau approprié par le premier terminal,
- la figure 4 illustre un exemple de réalisation d'un procédé mettant en oeuvre une temporisation au sens de l'invention dans le premier terminal,
- la figure 5 illustre un exemple de réalisation d'un procédé mettant en oeuvre une suppression de doublons de messages SMS dans le deuxième terminal, dans un mode de réalisation de l'invention,
- la figure 6 illustre schématiquement les éléments d'un terminal pour mettre en oeuvre un procédé selon l'un quelconques des scénarii des figures 1 à 3.

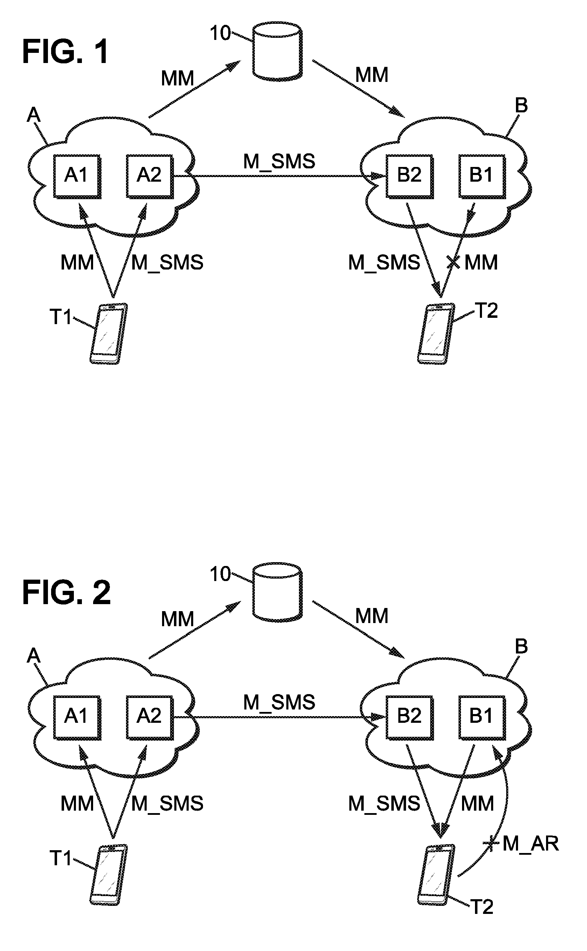

On se réfère tout d'abord à la figure 1 sur laquelle un système au sens de l'invention comporte :
- un premier terminal T1 connecté à un réseau de type multimédia A1 et classique A2 géré par un opérateur de télécommunication A,
- un deuxième terminal T2 connecté à un réseau de type multimédia B1 et classique B2 géré par un opérateur de télécommunication B,
- et, dans l'exemple décrit ici, un serveur de messagerie instantanée 10.

On entend ici par « terminal » mobile ou de télécommunication un dispositif tel qu'un téléphone mobile, un smartphone, une tablette, etc., comportant typiquement (en référence à la figure 6) une entrée de signal E et une sortie de signal S reliés à une antenne ANT et à un processeur PROC associé à une mémoire de travail MEM. On prévoit en outre une horloge H interne au processeur ou externe reliée au processeur, dans un exemple de réalisation, pour mettre en oeuvre la procédure de temporisation précitée.
L'application mise en oeuvre sur les terminaux, dans cet exemple de réalisation décrit ci-après, est une application de messagerie instantanée. Ainsi, on entend ici par « serveur de messagerie instantanée », un serveur dédié apte à recevoir et transmettre instantanément, le cas échéant stocker et gérer, des messages multimédia entre deux terminaux hébergeant une application de messagerie instantanée, via un réseau multimédia. Il peut typiquement être intégré à une plateforme de messagerie instantanée constituée du serveur dédié 10, une application logicielle faisant intervenir le serveur via ou plusieurs réseaux de communication.

On entend plus haut par « réseau multimédia », tout réseau de communication qui utilise un ensemble de protocoles de communication, à transferts par paquets ou non, apte à faire transiter des données multimédia telles que du texte, du son, de la parole, des images et/ou de la vidéo. On peut citer par exemple les protocoles GPRS, EDGE, UMTS, 3G, 4G, WIFI, WIMAX, internet, etc.

On entend ici par « réseau classique » tout réseau de communication qui utilise un ensemble de protocoles de communication, apte à faire transiter des données de texte essentiellement. On peut citer par exemple les protocoles GSM (2G) (pour « Global System for Mobile Communication »), CDMA, etc.

Dans ce qui suit, il est à noter que l'opérateur B peut être le même opérateur que A.

Les terminaux T1 et T2 mettent en oeuvre une application de messagerie instantanée, en coopération avec le serveur dédié 10 qui assure les transmissions de contenus multimédias habillant les messages instantanés qui sont échangés entre les terminaux T1 et T2.

Dans le scénario de la figure 1, le terminal destinataire T2 n'a pas accès au réseau de type multimédia B1. Le terminal T1 envoie un message multimédia MM via le réseau de type multimédia A1 à destination du terminal T2. Ce dernier ne recevant pas le message multimédia MM en provenance du serveur de messagerie instantanée 10, il n'envoie pas d'accusé de réception M_AR du message multimédia MM au terminal T1. L'application de messagerie instantanée met en oeuvre une temporisation, au sens de l'invention. Dans le scénario illustré sur la figure 1, le délai prédéterminé d'attente de la notification d'accusé de réception du message multimédia MM par le terminal T1 est dépassé, et le terminal T1 envoie un message textuel M_SMS sous la forme d'un message SMS via le réseau classique A2 à destination du terminal T2. Le message textuel M_SMS contient une information de disponibilité du message multimédia MM pour informer l'utilisateur du terminal T2 qu'un message multimédia MM est disponible lorsque l'accès au réseau de type multimédia B1 sera établi. Lorsque le deuxième terminal T2 accède au réseau de type multimédia B1, il reçoit le message multimédia MM et met éventuellement en oeuvre une suppression des messages redondants (tel que décrit ci-après en référence à la figure 5).

Chaque message multimédia MM est envoyé avec un identifiant unique MMi. L'identifiant est généré par le logiciel d'application de messagerie instantanée avant ou simultanément à l'envoi du message multimédia et incorpore des données relatives au couple terminal émetteur T1- terminal récepteur T2.

Dans un exemple de réalisation, on peut prévoir un identifiant comprenant par exemple :
- un identifiant local du terminal T1 (par exemple un numéro de téléphone au format E.164), et/ou
- un identifiant local du terminal T2, et/ou
- un identifiant Id de service de messagerie instantanée IM (ou de la plateforme).

L'identifiant MMi est préférentiellement court et comporte le moins de caractères possible pour limiter la surcharge des messages multimédia et SMS.

Si, après temporisation, l'accusé de réception du message multimédia MM ne parvient pas au terminal T1 dans un délai prédéterminé (quelques minutes par exemple), le message textuel de notification M_SMS, qui est envoyé par message SMS, contient une signature SGN de l'identifiant unique MMi.

Chaque identifiant et chaque signature d'identifiant de message reçu par le terminal T2 est archivé en mémoire MEM du terminal T2 dans une table dédiée (référence S53 de la figure 5). Lorsque l'identifiant MMi d'un message multimédia MM effectivement reçu auprès du terminal T2 et stocké en mémoire, est identique à l'identifiant MMi issu d'une signature de message textuel M_SMS (référence SGN de la figure 5 commentée plus loin) reçu ultérieurement, le message textuel M_SMS est supprimé. Une telle réalisation permet la suppression des doublons de façon efficace et garantit une expérience utilisateur nettement améliorée.

La figure 2 représente un système comportant des éléments similaires à ceux représentés sur la figure 1. Les références communes désignent des équipements de même nature. Dans ce scénario, le premier terminal envoie un message multimédia 21 à destination du deuxième terminal T2. Le terminal T2 reçoit le message multimédia MM mais l'accusé de réception M_AR n'est pas transmis au terminal T1 pour défaut d'accès au réseau multimédia par le terminal T2. La temporisation au sens de l'invention est mise en oeuvre dans le terminal T1. Si le délai prédéterminé d'attente de la notification d'accusé de réception du message multimédia MM par le terminal T1 est dépassé, alors le terminal T1 envoie un message textuel M_SMS sous la forme d'un message SMS via le réseau classique A2 à destination du terminal T2. On peut procéder à une suppression des messages redondants auprès du terminal T2. Dans ce scénario, le message textuel M_SMS est instantanément supprimé car le terminal T2 avait reçu le message multimédia MM typiquement pendant la temporisation qu'effectue le terminal T1. Dans ce scénario, l'utilisateur du terminal T2 n'est pas gêné par la réception du message textuel M_SMS de notification de disponibilité 22, lequel message est inutile.

La figure 3 représente un système comportant des éléments similaires à ceux représentés dans les figures 1 et 2. Les références communes désignent des équipements de même nature. Dans ce scénario, le premier terminal envoie un message multimédia MM à destination du deuxième terminal T2. Le terminal T2 reçoit le message multimédia MM puis envoie l'accusé de réception M_AR du message multimédia au terminal T1 via le réseau multimédia. Ici, le terminal T1 n'a pas accès au réseau multimédia. Il ne peut donc recevoir l'accusé de réception. La temporisation est alors mise en oeuvre dans le terminal T1 et, après cette temporisation, en l'absence d'accusé de réception, le terminal T1 déclenche l'envoi d'un message SMS de notification de disponibilité M_SMS au terminal T2 via le réseau classique A2. La suppression des messages redondants est mise en oeuvre dans le terminal T2 et le message textuel M_SMS est supprimé. Dans ce scénario, l'utilisateur du terminal T2 n'a donc pas connaissance du message textuel de notification de disponibilité M_SMS reçu.

La figure 4 illustre un exemple de réalisation du procédé mettant en oeuvre une temporisation au sens de l'invention dans le premier terminal T1. Dans l'étape S40, le terminal T1 envoie un message multimédia MM. Un compteur de boucle N est initialisé à l'étape S41. A l'étape de test T42, on vérifie si l'accusé de réception est parvenu auprès du terminal T1 (« AR Recep »). Si tel est le cas (flèche OK), à l'étape S43, le procédé se termine (END). En revanche, si l'accusé de réception n'est pas parvenu à l'étape de test T42 (flèche KO), on entame une boucle de temporisation, constituée des étapes S44 et T45, consistant respectivement par exemple en l'ajout d'une unité temporelle (issue par exemple de l'horloge H de la figure 6) au compteur N=N+1 (étape S44) et en la comparaison du compteur N avec un seuil temporel choisi THR (test T45), par exemple de 15 secondes et avec un seuil temporel THR choisi de 2 minutes. Si la valeur temporelle du compteur N atteint ou dépasse la valeur de seuil temporel THR (flèche OK), le terminal T1 envoie, à l'étape S46, un message SMS. Sinon (flèche KO), on revient à l'étape de test T42 de détermination de réception ou non de l'accusé de réception.

En référence maintenant à la figure 5, on met en oeuvre auprès du terminal T2 un procédé de suppression de doublons des messages SMS, faisant suite à une non-réception par le terminal T1 de l'accusé de réception du message multimédia après la temporisation, et à l'envoi par le terminal T1 du message SMS de notification de disponibilité du message multimédia MM au terminal T2. A l'étape S51, le terminal T2 reçoit donc le message SMS de notification (« Recep SMS »). A l'étape S52, la signature SGN d'identifiant de message multimédia MM est extraite du message SMS de notification précité. Le terminal T2 comporte une table d'identifiants MM1#, MM2#, MM3#, ..., MMi#, cette table archivant chaque identifiant MMi de chaque message multimédia effectivement reçu. Cette table d'identifiants est stockée en mémoire du terminal T2 et mise à jour à chaque réception d'un nouveau message multimédia parvenant au terminal T2.

A l'étape de test T54, on accède à la table d'identifiants à l'étape S53 pour comparer la signature SGN de l'identifiant de message multimédia MM reçu, aux identifiants de la table précitée. En cas de correspondance entre la signature SGN et l'un des identifiants MMi (flèche OK en sortie du test T54), le message SMS reçu est supprimé. Sinon (flèche KO), à l'étape S55, le terminal T2 affiche le message SMS pour informer l'utilisateur du terminal T2 de la disponibilité d'un message multimédia MM. Dans une réalisation, le message textuel M_SMS peut comporter un lien activable comportant l'identifiant MMi du message multimédia MM, de sorte que l'activation du lien précité (par exemple inclus dans une adresse URL) provoque la requête de ce message multimédia par le terminal T2, auprès du serveur de messagerie 10 (dans une réalisation où le serveur 10 stocke les messages ou contenus multimédias au moins temporairement par exemple), via le réseau multimédia B1.

Bien entendu, la présente invention ne se limite pas à la forme de réalisation décrite ci-avant ; elle s'étend à d'autres variantes.

On comprendra déjà que l'ensemble des scénarii présentés ci-avant n'est aucunement limitatif. Dans un scénario non représenté sur les dessins, le premier terminal peut envoyer un message textuel au deuxième terminal au travers d'une application de messagerie instantanée via le réseau multimédia. Si le deuxième terminal ne reçoit pas ce message textuel, et n'envoie finalement pas d'accusé de réception au premier terminal, l'étape de temporisation selon l'invention peut être mise en oeuvre. Néanmoins, un message textuel (de type SMS par exemple) peut toujours être envoyé après cette temporisation et prenant la forme, dans ce scénario, du message multimédia, sans contenu multimédia (en ne conservant alors que le texte seulement du message multimédia). Dans ce cas, le message textuel envoyé via le réseau classique par voie SMS n'est pas une notification de disponibilité comme dans les scénarii précédents, mais le message textuel en tant que tel, ceci dans les limites du nombre de caractères autorisé dans les messages SMS.

Le deuxième terminal peut ne pas recevoir le message multimédia pour d'autres raisons que le non accès au réseau multimédia. Par exemple, si le serveur de messagerie est défaillant, il n'est pas en mesure de transmettre le message multimédia, ou bien l'accusé de réception ou les deux. Dans ces cas de figure notamment, l'usager du deuxième terminal est notifié néanmoins par message SMS de la disponibilité de message multimédia, et l'usager du premier terminal reçoit l'accusé de réception du message SMS de notification.

Bien entendu, le message textuel, de type SMS dans la description ci-avant, peut se présenter sous une autre forme de message, toujours purement textuelle néanmoins.

## Revendications

1. Procédé de transmission d'un message multimédia (MM) d'un premier terminal (T1) à un deuxième terminal (T2), dans lequel on prévoit la notification, du deuxième terminal (T2) au premier terminal (T1), d'un accusé de réception (M_AR) par le deuxième terminal (T2) dudit message multimédia (MM), dans lequel:
- le premier terminal (T1) mesure un délai d'attente de la notification d'accusé de réception (M_AR),
- si ledit délai d'attente dépasse un seuil prédéterminé (THR), le premier terminal (T1) génère un message textuel (M_SMS) destiné au deuxième terminal (T2),
- le premier terminal (T1) affecte à chaque message multimédia (MM) un identifiant propre (MMi),
- le premier terminal (T1), en absence d'accusé de réception (M_AR) d'un message multimédia (MM) après le délai d'attente, affecte à un message textuel (M_SMS) généré une signature (SGN) de l'identifiant (MMi) dudit message multimédia (MM), et
- sur réception d'un message textuel (M_SMS), le deuxième terminal (T2) compare la signature (SGN) du message textuel (M_SMS) à au moins un identifiant (MMi) que comporte un message multimédia (MM) reçu par le deuxième terminal (T2), et en cas de correspondance, le deuxième terminal (T2) supprime ledit message textuel (M_SMS) reçu.

2. Procédé selon la revendication 1, dans lequel le message multimédia (MM) est transmis via un premier réseau de télécommunications, et ledit message textuel (M_SMS) est émis par le premier terminal (T1) via un second réseau.

3. Procédé selon l'une des revendications 1 et 2, dans lequel le message textuel (M_SMS) est de type SMS.

4. Procédé selon l'une des revendications précédentes, dans lequel le message textuel (M_SMS) comporte une information de disponibilité du message multimédia (MM) pour le deuxième terminal (T2).

5. Procédé selon l'une des revendications précédentes, dans lequel le message multimédia (MM) est un message dans une application de messagerie instantanée, et ledit message multimédia (MM) est destiné à transiter via un serveur dédié (10) entre les premier (T1) et deuxième (T2) terminaux.

6. Système comportant au moins un premier terminal (T1) et un deuxième terminal (T2), pour une transmission d'un message multimédia (MM) du premier terminal (T1) vers le deuxième terminal (T2), le deuxième terminal (T2) comportant des moyens d'émission d'une notification, du deuxième terminal (T2) au premier terminal (T1), d'accusé de réception (M_AR) par le deuxième terminal (T2) dudit message multimédia (MM), dans lequel le premier terminal (T1) comporte :
- des moyens de mesure d'un délai d'attente de la notification d'accusé de réception (M_AR),
- des moyens de comparaison du délai d'attente à un seuil prédéterminé (THR),
- des moyens pour générer un message textuel (M_SMS) destiné au deuxième terminal (T2), si le délai dépasse ledit seuil (THR),
Et dans lequel :
le premier terminal (T1) affecte à chaque message multimédia (MM) un identifiant propre (MMi),
- le premier terminal (T1), en absence d'accusé de réception (M_AR) d'un message multimédia (MM) après le délai d'attente, affecte à un message textuel (M_SMS) généré une signature (SGN) de l'identifiant (MMi) dudit message multimédia (MM), et
- sur réception d'un message textuel (M_SMS), le deuxième terminal (T2) compare la signature (SGN) du message textuel (M_SMS) à au moins un identifiant (MMi) que comporte un message multimédia (MM) reçu par le deuxième terminal (T2), et en cas de correspondance, le deuxième terminal (T2) supprime ledit message textuel (M_SMS) reçu.

7. Terminal de télécommunication, comportant :
- des moyens de mesure d'un délai d'attente d'une notification d'accusé de réception (M_AR) d'un message multimédia (MM) envoyé à un terminal tiers,
- des moyens de comparaison du délai d'attente à un seuil prédéterminé (THR),
- et des moyens pour générer un message textuel (M_SMS) destiné au terminal tiers, si le délai dépasse ledit seuil (THR),
- des moyens de comparaison, actifs sur réception d'un message textuel (M_SMS), entre une signature (SGN) que comporte le message textuel (M_SMS) et un identifiant (MMi) que comporte un message multimédia (MM) reçu, et
- des moyens de suppression dudit message textuel (M_SMS) reçu, actifs en cas de correspondance entre la signature (SGN) et l'identifiant (MMi).

8. Programme informatique comportant des instructions pour la mise en oeuvre du procédé selon l'une des revendications 1 à 5, lorsqu'il est mis en oeuvre par un processeur (PROC) d'un terminal selon la revendication 7.

## Patentansprüche

1. Verfahren zur Übertragung einer Multimedianachricht (MM) von einem ersten Endgerät (T1) an ein zweites Endgerät (T2), wobei die Übermittlung einer Bestätigung (M_AR) über den Empfang der Multimedianachricht (MM) vom zweiten Endgerät (T2) an das erste Endgerät (T1) durch das zweite Endgerät (T2) vorgesehen ist, wobei:
- das erste Endgerät (T1) einen Zeitraum des Wartens auf die Übermittlung der Empfangsbestätigung (M_AR) misst,
- wenn der Wartezeitraum einen vorbestimmten Schwellenwert (THR) überschreitet, das erste Endgerät (T1) eine an das zweite Endgerät (T2) gerichtete Textnachricht (M_SMS) erzeugt,
- das erste Endgerät (T1) jeder Multimedianachricht (MM) einen eigenen Identifikator (MMi) zuweist,
- das erste Endgerät (T1) bei ausgebliebener Bestätigung (M_AR) über den Empfang einer Multimedianachricht (MM) nach dem Wartezeitraum einer erzeugten Textnachricht (M_SMS) eine Signatur (SGN) des Identifikators (MMi) der Multimedianachricht (MM) zuweist und
- das zweite Endgerät (T2) bei Empfang einer Textnachricht (M_SMS) die Signatur (SGN) der Textnachricht (M_SMS) mit zumindest einem Identifikator (MMi), den eine vom zweiten Endgerät (T2) empfangene Multimedianachricht (MM) umfasst, vergleicht und im Falle einer Übereinstimmung das zweite Endgerät (T2) die empfangene Textnachricht (M_SMS) löscht.

2. Verfahren nach Anspruch 1, wobei die Multimedianachricht (MM) über ein erstes Telekommunikationsnetz übertragen wird und die Textnachricht (M_SMS) durch das erste Endgerät (T1) über ein zweites Netz gesendet wird.

3. Verfahren nach einem der Ansprüche 1 und 2, wobei die Textnachricht (M_SMS) vom SMS-Typ ist.

4. Verfahren nach einem der vorangehenden Ansprüche, wobei die Textnachricht (M_SMS) eine Information über die Verfügbarkeit der Multimedianachricht (MM) für das zweite Endgerät (T2) umfasst.

5. Verfahren nach einem der vorangehenden Ansprüche, wobei die
Multimedianachricht (MM) eine Nachricht in einer Nachrichtensofortversand-Anwendung ist und wobei die Multimedianachricht (MM) vorgesehen ist, über einen dezidierten Server (10) zwischen dem ersten (T1) und dem zweiten (T2) Terminal zu laufen.

6. System, umfassend zumindest ein erstes Endgerät (T1) und ein zweites Endgerät (T2) für eine Übertragung einer Multimedianachricht (MM) vom ersten Endgerät (T1) zum zweiten Endgerät (T2), wobei das zweite Endgerät (T2) Sendemittel zur Übermittlung einer Bestätigung über den Empfang (M_AR) der Multimedianachricht (MM) durch das zweite Endgerät (T2) vom zweiten Endgerät (T2) an das erste Endgerät (T1) umfasst, wobei das erste Endgerät (T1) Folgendes umfasst:
- Mittel zum Messen eines Zeitraums des Wartens auf die Übermittlung der Empfangsbestätigung (M_AR),
- Mittel zum Vergleichen des Wartezeitraums mit einem vorbestimmten Schwellenwert (THR),
- Mittel zum Erzeugen einer an das zweite Endgerät (T2) gerichteten Textnachricht (M_SMS), wenn der Zeitraum den Schwellenwert (THR) überschreitet,
und wobei:
- das erste Endgerät (T1) jeder Multimedianachricht (MM) einen eigenen Identifikator (MMi) zuweist,
- das erste Endgerät (T1) bei ausgebliebener Bestätigung (M_AR) über den Empfang einer Multimedianachricht (MM) nach dem Wartezeitraum einer erzeugten Textnachricht (M_SMS) eine Signatur (SGN) des Identifikators (MMi) der Multimedianachricht (MM) zuweist und
- das zweite Endgerät (T2) bei Empfang einer Textnachricht (M_SMS) die Signatur (SGN) der Textnachricht (M_SMS) mit zumindest einem Identifikator (MMi), den eine vom zweiten Endgerät (T2) empfangene Multimedianachricht (MM) umfasst, vergleicht und im Falle einer Übereinstimmung das zweite Endgerät (T2) die empfangene Textnachricht (M_SMS) löscht.

7. Telekommunikationsendgerät, umfassend:
- Mittel zum Messen eines Zeitraums des Wartens auf die Übermittlung einer Bestätigung (M_AR) über den Empfang einer an ein drittes Endgerät versandten Multimedianachricht (MM),
- Mittel zum Vergleichen des Wartezeitraums mit einem vorbestimmten Schwellenwert (THR) und
- Mittel zum Erzeugen einer an das dritte Endgerät gerichteten Textnachricht (M_SMS), wenn der Zeitraum den Schwellenwert (THR) überschreitet,
- bei Empfang einer Textnachricht (M_SMS) aktive Mittel zum Vergleichen zwischen einer Signatur (SGN), die die Textnachricht (M_SMS) umfasst, und einem Identifikator (MMi), den eine empfangene Multimedianachricht (MM) umfasst, und
- Mittel zum Löschen der empfangenen Textnachricht (M_SMS), die im Fall einer Übereinstimmung zwischen der Signatur (SGN) dem Identifikator (MMi) aktiv sind.

8. Informatikprogramm, umfassend Anweisungen zum Ausführen des Verfahrens nach einem der Ansprüche 1 bis 5, wenn es durch einen Prozessor (PROC) eines Endgeräts nach Anspruch 7 ausgeführt wird.

## Claims

1. Method for transmitting a multimedia message (MM) from a first terminal (T1) to a second terminal (T2), wherein notification (M_AR) of an acknowledgement of receipt, from the second terminal (T2) to the first terminal (T1), is provided by the second terminal (T2) for said multimedia message (MM), wherein:
- the first terminal (T1) measures a period of waiting for the notification of acknowledgment of receipt (M_AR),
- if said waiting period exceeds a predetermined threshold (THR), the first terminal (T1) generates a text message (M_SMS) to be sent to the second terminal (T2),
- the first terminal (T1) assigns an identifier (MMi) to each multimedia message (MM),
- the first terminal (T1), in the absence of acknowledgment (M_AR) of receipt of a multimedia message (MM) after the waiting period, assigns to a generated text message (M_SMS) a signature (SGN) of the identifier (MMi) of said multimedia message (MM),
- upon receiving a text message (M_SMS), the second terminal (T2) compares the signature (SGN) of the text message (M_SMS) to at least one identifier (MMi) contained in a multimedia message (MM) received by the second terminal (T2), and if they match, the second terminal (T2) removes said text message (M_SMS) received.

2. Method according to claim 1, wherein the multimedia message (MM) is transmitted via a first telecommunications network, and said text message (M_SMS) is transmitted by the first terminal (T1) via a second network.

3. Method according to one of claims 1 and 2, wherein the text message (M_SMS) is an SMS message.

4. Method according to one of the preceding claims, wherein the text message (M_SMS) includes availability information concerning the multimedia message (MM), for the second terminal (T2).

5. Method according to one of the preceding claims, wherein the multimedia message (MM) is a message in an instant messaging application, and said multimedia message (MM) is intended to travel between the first (T1) and second (T2) terminals via a dedicated server (10).

6. System comprising at least a first terminal (T1) and a second terminal (T2), for transmitting a multimedia message (MM) from the first terminal (T1) to the second terminal (T2), the second terminal (T2) comprising means for sending a notification (M_AR),from the second terminal (T2) to the first terminal (T1), of acknowledgement of receipt of said multimedia message (MM) by the second terminal (T2), wherein the first terminal (T1) comprises:
- means for measuring a period of waiting for the notification of acknowledgment of receipt (M_AR),
- means for comparing the waiting period to a predetermined threshold (THR), and
- means for generating a text message (M_SMS) to be sent to the second terminal (T2) if the period exceeds said threshold (THR),
and wherein :
- the first terminal (T1) assigns an identifier (MMi) to each multimedia message (MM),
- the first terminal (T1), in the absence of acknowledgment (M_AR) of receipt of a multimedia message (MM) after the waiting period, assigns to a generated text message (M_SMS) a signature (SGN) of the identifier (MMi) of said multimedia message (MM),and
- upon receiving a text message (M_SMS), the second terminal (T2) compares the signature (SGN) of the text message (M_SMS) to at least one identifier (MMi) contained in a multimedia message (MM) received by the second terminal (T2), and if they match, the second terminal (T2) removes said text message (M_SMS) received.

7. Telecommunications terminal comprising:
- means for measuring a waiting period for a notification of acknowledgment (M_AR) of receipt of a multimedia message (MM) sent to a third terminal,
- means for comparing the waiting period to a predetermined threshold (THR),
- and means for generating a text message (M_SMS) to be sent to the third terminal if the period exceeds said threshold (THR),
- means, which become active upon receipt of a text message (M_SMS), for comparing a signature (SGN) contained in the text message (M_SMS) and an identifier (MMi) contained in a multimedia message (MM) received, and
- means for deleting said text message (M_SMS) received, which become active if the signature (SGN) and the identifier (MMi) match.

8. Computer program comprising instructions for implementing the method according to one of claims 1 to 5, when executed by a processor (PROC) of a terminal according to claim 7.
